# EUROPEAN PATENT APPLICATION

(11) **EP 4 700 426 A1**
(43) Date of publication of application: **25.02.2026**
(21) Application number: 24195898.2
(22) Date of filing: 22.08.2024
(51) Int. Cl.: G01S 7/292, G01S 7/35, G01S 13/72, G01S 13/931, G01S 7/40, G01S 15/931, G01S 7/497, G01S 7/52

(54) **DETERMINING DISTANCES TO OBJECTS**

(71) Applicant: Volvo Construction Equipment AB, 631 85 Eskilstuna (SE)
(72) Inventor: BRATTBERG, Björn, 644 33 TORSHÄLLA (SE); MIKKELSEN, Martin, 635 36 ÄRLA (SE); LINDBERG, Mikael, 731 43 KÖPING (SE)
(74) Representative: Kransell & Wennborg KB

(57) **Abstract**

In an aspect, A computer system (14) of a vehicle (10) configured to monitor vehicle surroundings is provided. The computer system comprises processing circuitry (11) configured to acquire (S101) data samples from a monitoring device (15) configured to measure a distance to an object (20, 21) located within a field of view (17) of the monitoring device (15), determine (S102) a difference between at least two sequential data samples of the measured distance from the monitoring device (15) to the object (20, 21), and if said difference exceeds (S103) a set first threshold value (T_{D}), determine (S104) a number of distances within an operating range (d) of the monitoring device (15) to the object (20, 21) that are not measured by the monitoring device (15) during a set time period, wherein the measured distance to the object (20, 21) is not relied upon if the number of distances that are not measured during the set time period is below (S105) a set second threshold value (Tz).

## Description

### TECHNICAL FIELD

The disclosure relates to monitoring surroundings of a vehicle. In particular aspects, the disclosure relates to determining whether or not measured distances to encountered objects can be relied upon. The disclosure can be applied in vehicles such as cars, busses, light-weight trucks, mid-weight trucks, heavy-duty trucks, construction equipment and machines, motorcycles and marine vessels. Although the disclosure may be described with respect to a particular vehicle, the disclosure is not restricted to any particular vehicle.

### BACKGROUND

Vehicles such as e.g. trucks, construction machines or cars utilize monitoring devices in the form of radar sensors, lidar sensors, sonar sensors, etc., to monitor surroundings of the vehicle in order to detect surrounding vehicles, objects and individuals.

Measurement data of the monitoring device may be analyzed by the vehicle to facilitate autonomous or semi-autonomous operation of the vehicle, such as for instance activating vehicle braking in case an obstacle is encountered, or to have the vehicle steer clear of the encountered obstacle.

However, the monitoring device is commonly subjected to disturbances in the form of for instance electric noise of internal components, interference, environmental conditions such as for example snow, water, fog or dust, incorrect sensor configuration, etc., which makes the monitoring less reliable.

### SUMMARY

According to a first aspect of the disclosure, a computer system of a vehicle is provided configured to monitor vehicle surroundings. The computer system comprises processing circuitry configured to acquire data samples from a monitoring device configured to measure a distance to an object located within a field of view of the monitoring device, determine a difference between at least two sequential data samples of the measured distance from the monitoring device to the object, and if said difference exceeds a set first threshold value, determine a number of distances within an operating range of the monitoring device to the object that are not measured by the monitoring device during a set time period, wherein the measured distance to the object is not relied upon if the number of distances that are not measured during the set time period is below a set second threshold value.

The first aspect of the disclosure may seek to resolve an issue of how to determine whether or not the monitoring device is subjected to disturbances in the form of e.g. noise, interference, severe weather conditions, etc. A technical benefit may include enabling determination as to whether measured distances of the monitoring device can be relied upon.

In some examples, if said difference is below the set first threshold value, the measured distance to the object is relied upon. A technical benefit may include to determine that the monitoring device is not subjected to disturbances and thus that the measured distance can be relied upon.

In some examples, if the number of distances that are not measured during the set time period is above the set second threshold value, the measured distance to the object is relied upon. A technical benefit may include to determine that the monitoring device is not subjected to disturbances and thus that the measured distance can be relied upon.

In some examples, if the number of distances that are not measured during the set time period is above the set second threshold value, the object is determined to move in and out of the field of view of the monitoring device. A technical benefit may include to distinguish this situation from a situation where the monitoring device is subjected to disturbances.

In some examples, the determining of a difference between at least two sequential data samples of the measured distance from the monitoring device to the object comprises determining differences between three or more sequential data samples of the measured distance.

In some examples, in case it is determined that the measured distance to the object cannot relied upon, the processing circuitry is configured to alert an operator of the vehicle that the measured distance to the object cannot be relied upon. A technical benefit may include to facilitate for the operator to take an appropriate actions, such as stopping the vehicle.

In some examples, in case it is determined that the measured distance to the object cannot relied upon, the processing circuitry is configured to autonomously control operation of the vehicle.

In some examples, the determining of a number of distances within an operating range of the monitoring device to the object that are not measured by the monitoring device during a set time period further comprises to sort the distance data samples in corresponding bins of a histogram to identify specific distances not being measured.

In some examples, the monitoring device comprises one or more of a radar sensor, a lidar sensor or sonar sensor.

In some examples, the time period is set to allow all possible distances within the operating range to be measured, as determined by the operating range, distance measurement resolution and the frequency with which the data samples are acquired.

In some examples, a vehicle is provided comprising the computer system of the first aspect.

In some examples, the vehicle is further being configured to be autonomous or semi-autonomous.

According to a second aspect of the disclosure, a method of a vehicle configured to monitor vehicle surroundings is provided. The method comprises acquiring data samples from a monitoring device configured to measure a distance to an object located within a field of view of the monitoring device, determining a difference between at least two sequential data samples of the measured distance from the monitoring device to the object, and if said difference exceeds a set first threshold value, determining a number of distances within an operating range (d) of the monitoring device to the object that are not measured by the monitoring device during a set time period, wherein the measured distance to the object is not relied upon if the number of distances that are not measured during the set time period is below a set second threshold value.

In some examples, a computer program product is provided comprising program code for performing, when executed by the processing circuitry, the method of the second aspect.

In some examples, a non-transitory computer-readable storage medium is provided comprising instructions, which when executed by the processing circuitry, cause the processing circuitry to perform the method of the second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 illustrates a vehicle in the form of a truck in which examples of the present disclosure may be implemented.
FIG. 2 shows an exemplary system diagram of a computer system with which the truck of FIG. 1 is equipped according to the present disclosure.
FIG. 3 illustrates a truck being equipped with a rear-end radar sensor having a certain operating range.
FIG. 4 illustrates the truck of FIG. 3 measuring distance to an object in an example according to the present disclosure.
FIG. 5 illustrates acquired data samples of measured distances being sorted in bins of a histogram in an example according to the present disclosure.
FIG. 6 illustrates the acquired data samples being approximated to nearest pre-determined quantization levels in an example according to the present disclosure.
FIG. 7 illustrates acquired data samples being subjected to noise in an example according to the present disclosure.
FIG. 8A and 8B illustrate the truck of FIG. 3 measuring distance to an individual moving in and out of a field of view of the radar sensor in an example according to the present disclosure.
FIG. 9 illustrates a histogram for data samples acquired in the scenario of FIG. 8A and 8B in an example according to the present disclosure.
FIG. 10 shows a flowchart illustrating an example of monitoring vehicle surroundings according to the present disclosure.
FIG. 11 is a schematic diagram of a computer system for implementing examples disclosed herein.

### DETAILED DESCRIPTION

Aspects set forth below represent the necessary information to enable those skilled in the art to practice the disclosure.

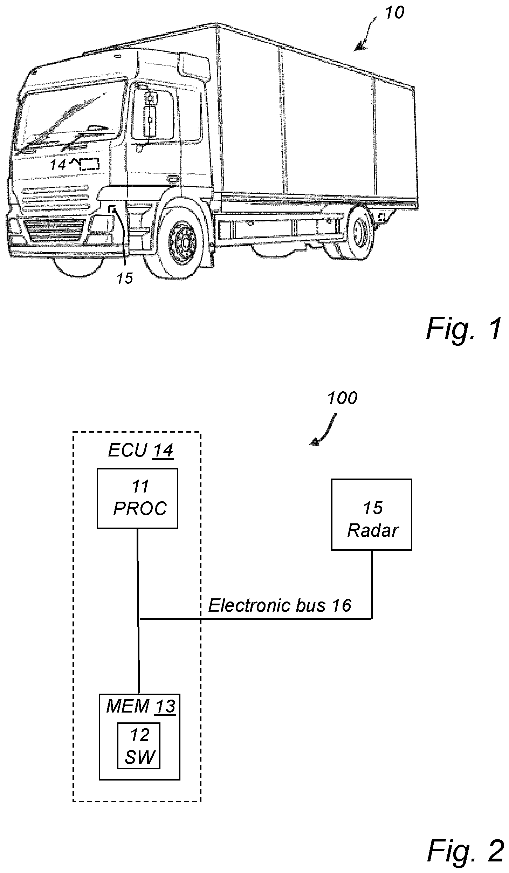

FIG. 1 illustrates a vehicle in the form of a truck 10 in which examples of the present disclosure may be implemented, the truck 10 being equipped with a computer system 14, e.g. in the form of a so-called Electronic Control Unit (ECU) controlling operation of the truck 10. For detecting surrounding vehicles, objects and individuals, the ECU 14 is typically in communicative connection with one or more sensors 15 of the truck 10, such as e.g., radar, lidar, cameras, sonar, etc., for monitoring the surroundings of the vehicle and thus to detect surrounding vehicles, objects and individuals. In this example, the surroundings are monitored by a radar device 15, i.e. a radio signal transmitting device. However, as mentioned, sensor devices based on light or sound signals are envisaged. Although the vehicle 10 in FIG. 1 is depicted as a heavy-duty truck, examples of the present disclosure may be implemented in other types of vehicles, such as in passenger cars, busses, light-duty trucks, mid-duty trucks, construction machines and equipment, motorcycles, marine vessels, etc. As is understood, the vehicle 10 may be capable of partly or fully autonomous driving or provided with adaptive cruise control (ACC). Further, the truck 10 may be equipped with numerous sensors 15 located at the front, rear and sides of the truck 10.

FIG. 2 shows an exemplary system diagram of the computer system 14 with which the truck 10 of FIG. 1 is equipped according to the present disclosure. The computer system 14 will in the following be exemplified by an ECU 14.

The ECU 14 generally comprises processing circuitry (PROC) 11 and a storage medium (MEM) 13 associated with the microprocessor, such as a Random Access Memory (RAM), a Flash memory or a hard disk drive. One or more computer programs (SW) 12 may be stored in the storage medium 13.

The processing circuitry 11 is arranged to cause the ECU 14 to perform desired operations when the appropriate computer program 12 comprising computer-executable instructions is downloaded to the storage medium 13 and executed by the processing circuitry 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing circuitry 11 may alternatively be embodied in the form of a digital signal processor (DSP), an application specific integrated circuit (ASIC), a field-programmable gate array (FPGA), a complex programmable logic device (CPLD), etc.

Further shown in FIG. 2 is the radar sensor 15 used for object detection. As is understood, ECU 14 and the radar sensor 15 forms a monitoring system 100 where the monitoring of the vehicle surroundings and the object detection undertaken by the ECU 14 is performed by collecting data from the radar sensor 15.

Communication between the various devices illustrated in FIG. 2 may occur via an electronic communication bus 16 such as e.g., a Controller Area Network (CAN) bus, a Local Interconnect Network (LIN) bus, an Ethernet bus, etc. Alternatively, wireless communication may occur between the devices.

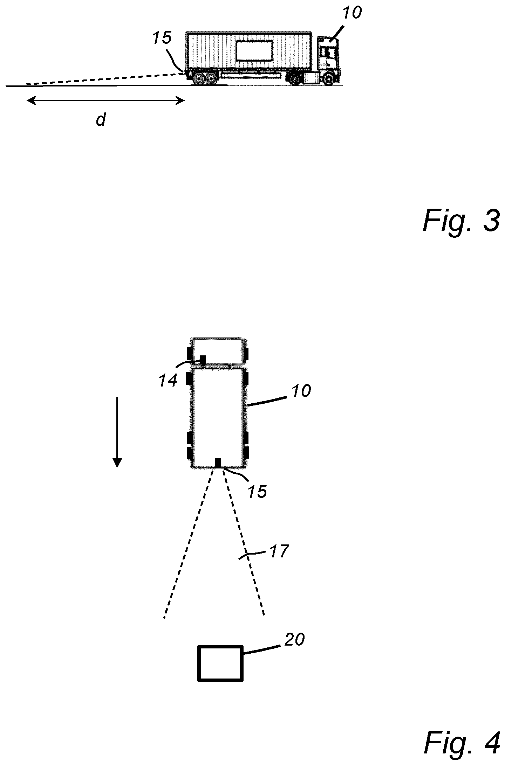

FIG. 3 illustrates in a side view the truck 10 being equipped with a radar sensor 15 at its rear end in order to be able to detect any objects upon the truck moving in a reverse direction, thus avoiding backing into any objects located behind the truck 10. Typically, vehicle radar sensors are tilted slightly downwards and as shown in FIG. 3, the radar sensor 15 is configured to measure distances up to a maximum distance d. In the examples below, the maximum distance d is configured to be 6 m. In other words, an object must be located within the operating range of the radar sensor 15 in order to be detected and in the examples below, the operating range is 6 m. However, as is understood, this distance may be greater or smaller depending on the particular implementation.

FIG. 4 illustrates in a top view the truck 10 moving in a reverse direction while having the ECU 14 of the truck 10 operating the radar sensor 15 to transmit radio signals to monitor the surroundings of the truck 10 and detecting objects within a field-of-view (FOV) of the sensor 15.

Thus, as illustrated in FIG. 4, the radar signals transmitted by the radar sensor 15 will impinge on an object 20 within the FOV 17 of the radar sensor 15 and be reflected back to the radar sensor 15, wherein the ECU 14 can determine a distance from the truck 10 to the object 20. Utilizing radar signals for determining a distance to a target 20 is well-known in the art and will not be described in further detail herein.

As is understood, the data collected by the radar sensor 15 is sampled and quantized at the ECU 14 to create discrete distance values. The monitoring system 100 will hence have a measurement resolution which depends on the degree of quantization at the ECU 14.

In an example, assuming that the (stationary) object 20 is located on a distance of 6 m from the truck 10 and that measuring resolution of the radar sensor is 0.1 m, the ECU 14 can compute 60 possible different distance values from the data being recorded by and output from the radar sensor 15.

Assuming further that the measurement frequency of the ECU 14 is 20 measurement samples/s and that the truck 10 moves to a position where the truck is up close to the object 20; the ECU 14 will then have access to a total of 200 measurement samples after having travelled the distance of 6 m until reaching the stationary object 20 after 10 s. Based on the samples acquired upon moving towards the object 20, the ECU 14 will continuously determine the distance to the object 20.

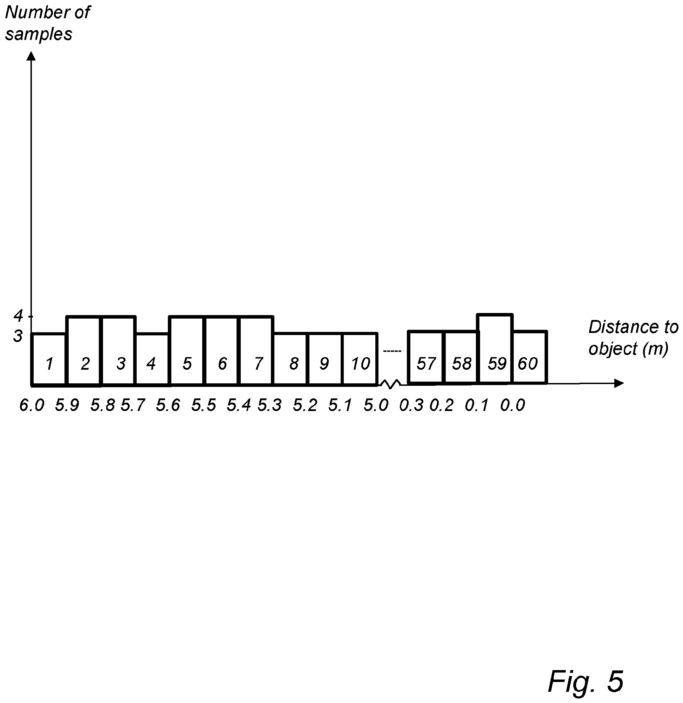

FIG. 5 shows a histogram illustrating the number of measurements samples taken by the ECU 14 as a function of the distance from the truck 10 to the object 20. Upon traveling from the starting point 6 m away from the object, the ECU 14 will continuously acquire samples of the data being output from the radar sensor 15 and determine a current distance to the object 20 based on the acquired measurement samples. Thus, each of the 60 bins of the histogram will typically contain 3-4 samples (the average number of samples for each bin is 200/60 = 3.33).

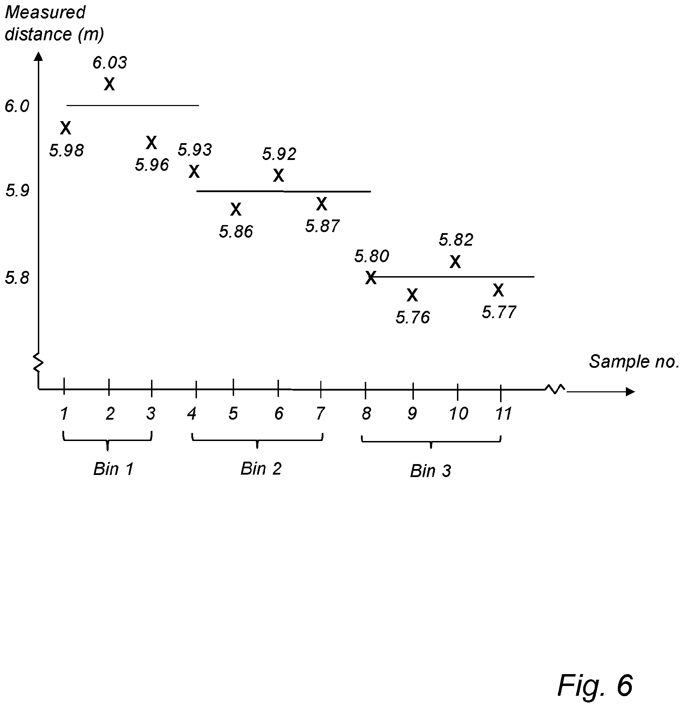

Hence, with reference to FIG. 6, from the first three samples indicating distances 5.98, 6.03 and 5.96 m, respectively (i.e. Bin 1 in the histogram of FIG. 5), the ECU 14 will approximate the sampled values to the nearest pre-determined quantization level and hence determine that the distance to the object 20 is 6.0 m.

From the next four samples indicating distances 5.93, 5.86, 5.92 and 5.87 m - i.e. constituting Bin 2 in the histogram of FIG. 5 - the ECU 14 will approximate the sampled values to the nearest quantization level and hence determine that the distance to the object 20 is 5.9 m.

From samples no 8-11 (i.e. Bin 3) indicating distances 5.80, 5.76, 5.82 and 5.77 m, the ECU 14 will a determine that the distance to the object 20 is 5.8 m, and so on.

As can be concluded, as long as at the radar sensor 15 is not subjected to the previously mentioned disturbances in the form of e.g. noise, interference, severe weather conditions, etc., the accuracy of the determined distance to the object 20 is typically good and the determined distance(s) can be relied upon. The difference between any two sequential samples it typically small, generally only affected by the relative speed of the vehicle 10 and the object 20, and the accuracy of the monitoring system 100).

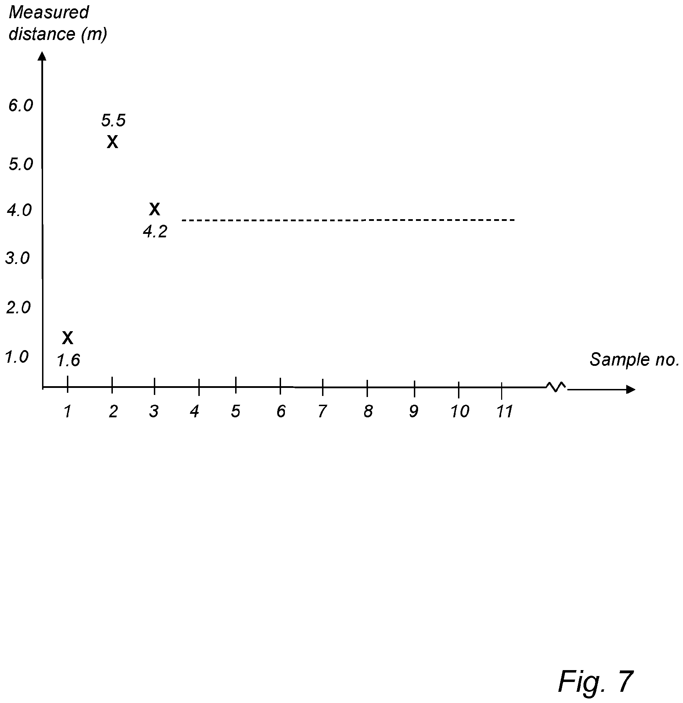

However, with reference to FIG. 7 (showing only three samples for illustration), in a scenario where the radar sensor 15 indeed is subjected to these types of disturbances, the data acquired by the ECU 14 from the radar sensor 15 suffers from random noise, and the samples quantized at the ECU 14 will typically result in random distance values being determined by the ECU 14. For instance, in contrast to the illustration of FIG. 6, the first sample may indicate a distance of, say, 1.6 m, while the second sample indicates a distance of 5.5 m and the third sample indicates that the distance is 4.2 m. Hence, due to the random nature of the data measured by the radar sensor 15, any measured distance can be expected regardless of the actual distance from the truck 10 to the object 20.

As a consequence, the measured data (and the distances determined from the measured data) cannot be relied upon in case the radar sensor 15 is subjected to these types of disturbances.

In such a scenario, the histogram of the random noise measurements of FIG. 7 will be very similar to that illustrated in FIG. 5 where the radar sensor 15 is not subjected to random noise disturbances and the measurements indeed are accurate.

As is understood, due to the random nature of the measure data acquired by the ECU 14, the samples will (albeit being incorrect) be evenly distributed over the distance of 6 m and hence result in the 200 samples being evenly allocated in each bin, again with typically 3-4 samples in each bin.

Thus, in both the scenario of FIGS. 5 and 6 where the radar sensor 15 is not subjected to noise and as a result performs accurate and correct distance measurements upon approaching the object 20, as well as the scenario illustrated in FIG. 7 where the radar sensor 15 indeed is subjected to noise and the measurements will be incorrect, the histogram will indicate that most (if not all) of the 60 possible distances - each represented by a bin - are measured, resulting in evenly distributed histogram bins, with the difference that the three samples of FIG. 7 will go into different histogram bins. Hence, most distances within the operating range of the radar sensor 15 will be measured in both these scenarios. As is understood, any distance within the operating range of the radar sensor 15 which is not measured will lack a corresponding bin in the histogram and is commonly referred to as a "zero".

In an example of the present disclosure, the noise measurements - which preferably should not be relied upon for determining the distances - is identified by the ECU 14 analyzing at least two sequential distance samples to determine whether or not there is a sufficiently great variance between the two.

For instance, with reference again to FIG. 6, it is illustrated that the difference between two sequential samples is greatest for samples no. 1 and 2, in which case the difference between the two samples amounts to 0.05 m (6.03 - 5.98 = 0.05 m).

In an example, a difference threshold value T_{D} may be set to e.g. 0.2 m, wherein in case the difference in distance between any two sequential samples exceeds the difference threshold value T_{D}, the radar sensor 15 will be considered by the ECU 14 to be subjected to noise, and the measurement data of the radar sensor 15 should consequently not be relied upon.

In a further example, to avoid false positives in determining whether or not the radar sensor 15 is subjected to noise, the ECU 14 may conclude that more than two sequential samples should exhibit a difference in distance exceeding the difference threshold value T_{D}, such as e.g. three or more sequential samples.

With reference to the example given with reference to FIG. 7 where the radar sensor 15 indeed is subjected is to noise, the ECU 14 will conclude that the distance between the first sample and the second sample is 5.5 - 1.6 = 3.9, which is far above the threshold value T_{D} of 0.2 m, thereby clearly indicating noise.

Further, if the third sample of 4.2 m would be taken into consideration, the ECU 14 will conclude that the difference between the second sample and the third sample is 4.2 - 1.6 = 2.6 m, which also greatly exceeds the threshold value T_{D}. Hence, in such case, the ECU 14 concludes that not only two but three sequential samples indeed presents a difference in distance (greatly) exceeding the difference threshold value T_{D}, making it even clearer that the radar sensor 15 is subjected to noise.

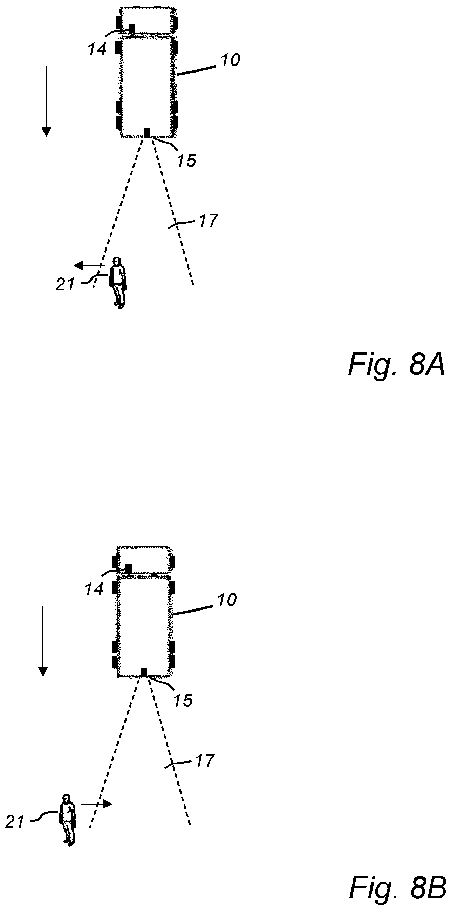

However, FIG. 8A and 8B illustrates a commonly occurring scenario where an object in the form of an individual 21 moves in and out of the FOV 17 of the radar sensor 15. It is assumed that the truck 10 is at standstill and that the individual 21 is located, say, 5.2 m from the truck 10 and within the FOV 17 of the radar sensor 15.

As long as the individual remains at the 5.2 m distance from the truck 10 and within the FOV 17 (and the radar sensor 15 is not subjected to noise) as illustrated in FIG. 8A, the ECU 14 will, from the measurement data acquired from the radar sensor 15, determine that such is the case. Hence, a great number of samples are acquired indicating that the individual 21 is located somewhere around 5.2 m from the truck 10.

However, when the individual 21 moves out of the FOV 17 of the radar sensor 15 as illustrated in FIG. 8B, the transmitted radar signals will not impinge on the individual 21 and be reflected back to the radar sensor 15 but will impinge on the ground 6 m behind the truck 10, which typically will result in the ECU 14 determining a maximum possible distance (i.e. 6 m being the maximum measurable distance configuration in this example).

The individual 21 may move in and out of the FOV 17 at the distance of 5.2 m, which results in a correctly measured distance of approximately 5.2 m when the individual is within the FOV 17 of the radar sensor (see FIG. 8A), and an incorrectly measured distance of 6 m when the individual 21 is outside of the FOV 17 of the radar sensor 15 (see FIG. 8B).

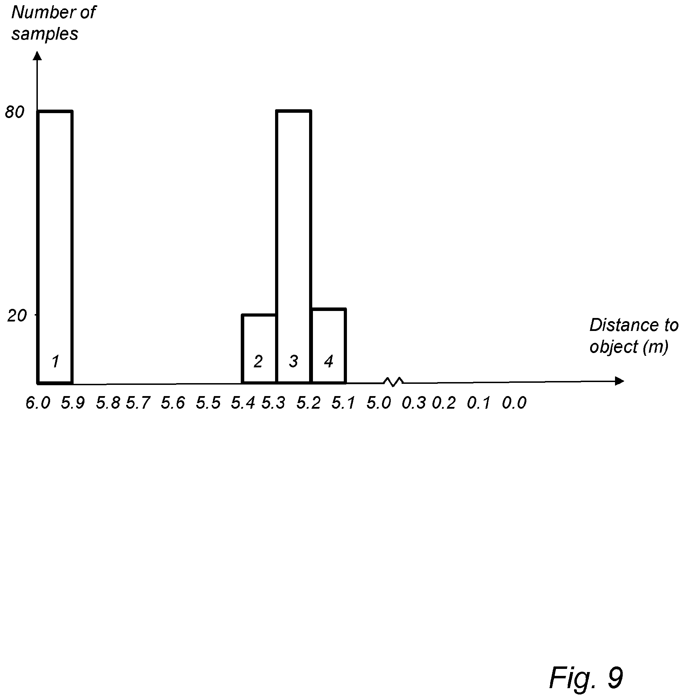

This is illustrated with the histogram of FIG. 9, where it is assumed that all of the 200 samples will be distributed over only four bins, i.e. the first bin representing a distance of 6 m, the second bin representing a distance of 5.3 m, the third bin representing a distance of 5.2 m and the fourth bin representing a distance of 5.1 m. It is further assumed that a majority of the samples, around 80 in FIG. 9, either will indicate a distance of 6 m (i.e. FIG 8A) or a distance of 5.2 m (i.e. FIG 8B), with s small amount of the samples (around 20) indicating a distance of either 5.1 m or 5.3 m to the individual 21.

Hence, while in this scenario there will be great variance between sequential samples - the samples indicating either 6 m or 5.2 m depending on whether or not the individual 21 is within the FOV 17 of the radar sensor 15 - this is not due to the radar sensor 15 being subjected to noise, but rather due to the commonly according situation where an objected 21 moves in and out of the FOV 17 of the radar sensor 15.

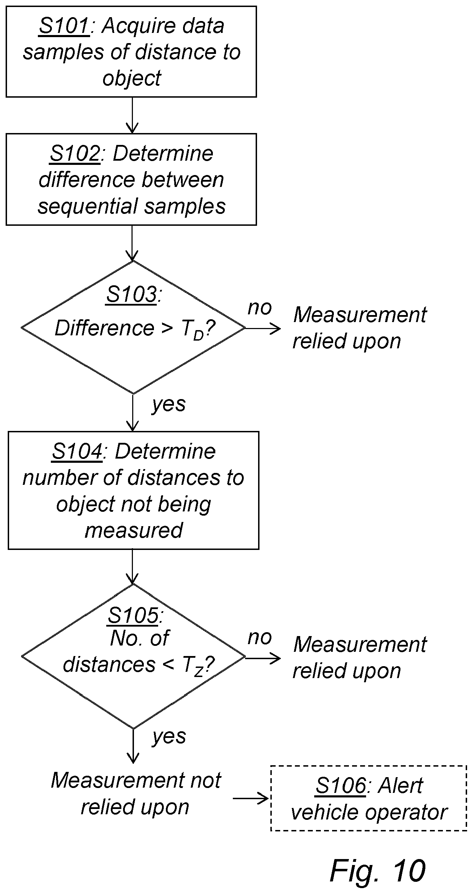

In an example of the present disclosure, to resolve this issue a method is proposed being illustrated with reference to the flowchart of FIG. 10.

Thus, as previously described, in a first step S101, the ECU 14 acquires data samples from the radar sensor 15 configured to measure a distance to an object located within the FOV 17 of the sensor 15.

In S102, the ECU 14 determines a difference in sequential samples of the measured distance from the radar sensor 15 to the object.

As previously exemplified, in case the radar sensor 15 is not subjected to disturbances as illustrated with reference to FIG. 5 and FIG. 6 where the distance to the object 20 is measured, the differences in distance between sequential samples are small (the greatest difference being 0.05 m between samples no. 1 and 2), i.e. not exceeding the distance threshold value T_{D} as determined in S103, and the measured distance will thus be relied upon.

As further previously exemplified, in case the radar sensor 15 is subjected to disturbances as illustrated with reference to FIG. 7, the differences in distance between sequential samples are great (3.9 m and 1.3 m, respectively, for samples no. 1 and 2 and samples no. 2 and 3), i.e. exceeding the distance threshold value T_{D} as determined in S103, which indicates that the measured distance to the object 20 possibly should not be relied upon.

As further exemplified with reference to FIG. 9 where the distance to the individual 21 is measured, which individual 21 moves in and out of the FOV 17 of the radar sensor 15, the differences in distance between sequential samples are great (i.e. varying between 6 m and around 5.2 m, resulting in a difference of 0.8 m), i.e. exceeding the distance threshold value T_{D} as determined in S103, which indicates that the measured distance to the individual 21 possibly should not be relied upon.

Thus, in order to distinguish between the situation of FIG.7 where the radar measurements should not be relied upon and the situation of FIG. 9 - which indeed illustrates a correct measurement that should be relied upon, the ECU 14 proceeds to step S104 to determine a number of distances within an operating range of the radar sensor 15 to the object 20 or to the individual that are not measured by the radar sensor 15 during the set time period (i.e. 10 s in the above examples).

Hence, while it can be concluded by the ECU 14 in S103 that the differences in distance for sequential samples exceed the difference threshold value T_{D} of 0.2 m (i.e. a first threshold value) for both the scenarios of FIG. 7 and 9, the ECU 14 further concludes in S104 that the number of distances within the operating range (i.e. 6 m in this example) of the radar sensor 15 that are not measured during the set time period of 10 s is below a set second threshold value Tz, the second threshold value Tz being set e.g. to 5.

Turning to the histogram of FIG. 9, it can be seen that the number of measured distances to the individual 21 within the operating range of the radar sensor 15 is low; in this example only 4 out of 60 distances are measured, having as an effect that 56 possible distances to individual 21 are not measured ("zeros"), whereas in case the radar sensor 15 is subjected to random noise, the histogram would have the appearance of that illustrated in FIG. 5, where all 60 possible distances to the object 20 are measured, resulting in no zeros.

Thus, the ECU concludes in S105 that the number of distances within the 6 m operating range of the radar sensor 15 that are not measured during the set time period of 10 s is below 5, which occur for the scenario where the radar sensor 15 is subjected to noise but not in the scenario where the individual 21 moves in and out of the FOV 17 of the radar sensor 15.

Advantageously, the proposed method is capable of identifying a situation where the radar sensor 15 indeed is subjected to noise (see FIG. 7) and is further capable of distinguishing such a situation from that where a target object 21 moves in and out of the FOV 17 of the radar sensor 15 (see FIG. 9), the former being a scenario where the measurements should not be relied upon while in the latter case, the measurements should indeed be relied upon.

In an optional example, the ECU 14 may alert an operator/driver of the truck in S106 that the measured distance should not be relied upon,

As an alternative, the ECU 14 may autonomously control operation of the truck 10 if the measured distance should not be relied upon, such as activating a braking function or even shutting down the truck 10 to avoid the truck 10 colliding with the object 20.

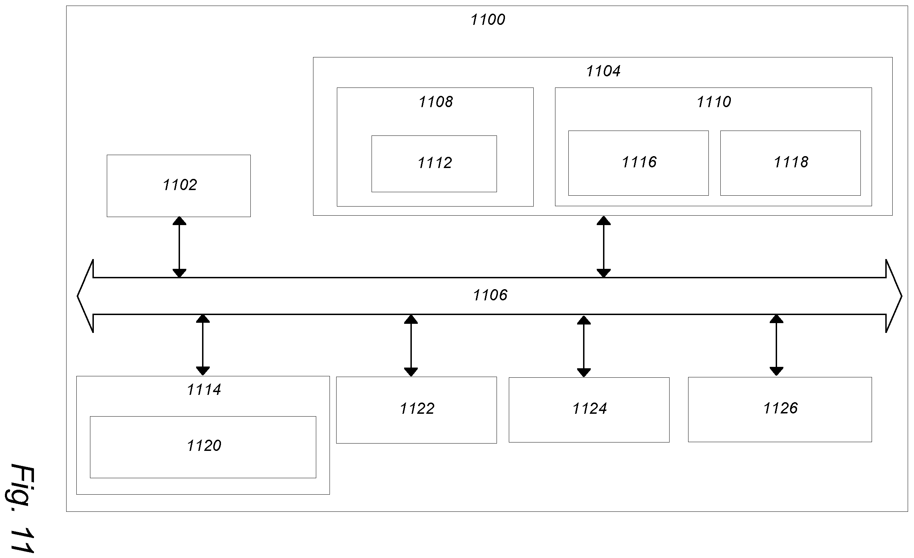

FIG. 11 is a schematic diagram of a computer system 1100 for implementing examples disclosed herein. The computer system 1100 is adapted to execute instructions from a computer-readable medium to perform these and/or any of the functions or processing described herein. The computer system 1100 may be connected (e.g., networked) to other machines in a LAN, an intranet, an extranet, or the Internet. While only a single device is illustrated, the computer system 1100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1100 may comprise at least one computing device or electronic device capable of including firmware, hardware, and/or executing software instructions to implement the functionality described herein. The computer system 1100 may include a processor device 1102 (may also be referred to as a control unit), a memory 1104, and a system bus 1106. The computer system 1100 may include at least one computing device having the processor device 1102. The system bus 1106 provides an interface for system components including, but not limited to, the memory 1104 and the processor device 1102. The processor device 1102 may include any number of hardware components for conducting data or signal processing or for executing computer code stored in memory 1104. The processor device 1102 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 1106 may be any of several types of bus structures that may further interconnect to a memory bus (with or without a memory controller), a peripheral bus, and/or a local bus using any of a variety of bus architectures. The memory 1104 may be one or more devices for storing data and/or computer code for completing or facilitating methods described herein. The memory 1104 may include database components, object code components, script components, or other types of information structure for supporting the various activities herein. Any distributed or local memory device may be utilized with the systems and methods of this description. The memory 1104 may be communicably connected to the processor device 1102 (e.g., via a circuit or any other wired, wireless, or network connection) and may include computer code for executing one or more processes described herein. The memory 1104 may include non-volatile memory 1108 (e.g., read-only memory (ROM), erasable programmable read-only memory (EPROM), electrically erasable programmable read-only memory (EEPROM), etc.), and volatile memory 1110 (e.g., random-access memory (RAM)), or any other medium which can be used to carry or store desired program code in the form of machine-executable instructions or data structures and which can be accessed by a computer or other machine with a processor device 1102. A basic input/output system (BIOS) 1112 may be stored in the non-volatile memory 1108 and can include the basic routines that help to transfer information between elements within the computer system 1100.

The computer system 1100 may further include or be coupled to a non-transitory computer-readable storage medium such as the storage device 1114, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1114 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 1114 and/or in the volatile memory 1110, which may include an operating system 1116 and/or one or more program modules 1118. All or a portion of the examples disclosed herein may be implemented as a computer program product 1120 stored on a transitory or non-transitory computer-usable or computer-readable storage medium (e.g., single medium or multiple media), such as the storage device 1114, which includes complex programming instructions (e.g., complex computer-readable program code) to cause the processor device 1102 to carry out actions described herein. Thus, the computer-readable program code can comprise software instructions for implementing the functionality of the examples described herein when executed by the processor device 1102. The processor device 1102 may serve as a controller or control system for the computer system 1100 that is to implement the functionality described herein.

The computer system 1100 also may include an input device interface 1122 (e.g., input device interface and/or output device interface). The input device interface 1122 may be configured to receive input and selections to be communicated to the computer system 1100 when executing instructions, such as from a keyboard, mouse, touch-sensitive surface, etc. Such input devices may be connected to the processor device 1102 through the input device interface 1122 coupled to the system bus 1106 but can be connected through other interfaces such as a parallel port, an Institute of Electrical and Electronic Engineers (IEEE) 1394 serial port, a Universal Serial Bus (USB) port, an IR interface, and the like. The computer system 1100 may include an output device interface 1124 configured to forward output, such as to a display, a video display unit (e.g., a liquid crystal display (LCD) or a cathode ray tube (CRT)). The computer system 1100 may also include a communications interface 1126 suitable for communicating with a network as appropriate or desired.

The operations described in any of the exemplary aspects herein are described to provide examples and discussion. The operations may be performed by hardware components, may be embodied in machine-executable instructions to cause a processor to perform the operations, or may be performed by a combination of hardware and software. Although a specific order of operations may be shown or described, the order of the operations may differ. In addition, two or more operations may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, operations, elements, and/or components, but do not preclude the presence or addition of one or more other features, integers, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Example 1. A computer system (14) of a vehicle (10) configured to monitor vehicle surroundings, the computer system comprising processing circuitry (11) configured to:
acquire (S101) data samples from a monitoring device (15) configured to measure a distance to an object (20, 21) located within a field of view (17) of the monitoring device (15);
determine (S102) a difference between at least two sequential data samples of the measured distance from the monitoring device (15) to the object (20, 21), and if said difference exceeds (S103) a set first threshold value (T_{D});
determine (S104) a number of distances within an operating range (d) of the monitoring device (15) to the object (20, 21) that are not measured by the monitoring device (15) during a set time period, wherein the measured distance to the object (20, 21) is not relied upon if the number of distances that are not measured during the set time period is below (S105) a set second threshold value (T_{Z}).

Example 2. The computer system (14) of example 1, wherein if said difference is below (S103) the set first threshold value (T_{D}), the measured distance to the object (20, 21) is relied upon.

Example 3. The computer system (14) of examples 1 or 2, wherein if the number of distances that are not measured during the set time period is above (S105) the set second threshold value (Tz), the measured distance to the object (20, 21) is relied upon.

Example 4. The computer system (14) of example 3, wherein the determining that the number of distances that are not measured during the set time period is above (S105) the set second threshold value (Tz) indicates the object (21) moving in and out of the field of view (17) of the monitoring device (15).

Example 5. The computer system (14) of any one of the preceding examples, wherein the determining (S102) of a difference between at least two sequential data samples of the measured distance from the monitoring device (15) to the object (20, 21) comprises determining differences between three or more sequential data samples of the measured distance.

Example 6. The computer system (14) of any one of the preceding examples, wherein in case it is determined (S105) that the measured distance to the object (20, 21) cannot relied upon, the processing circuitry (11) is configured to:
alert (S106) an operator of the vehicle (10) that the measured distance to the object (20, 21) cannot be relied upon.

Example 7. The computer system (14) of any one of the preceding examples, wherein in case it is determined (S105) that the measured distance to the object (20, 21) cannot relied upon, the processing circuitry (11) is configured to:
autonomously control operation of the vehicle (10).

Example 8. The computer system (14) of any one of the preceding examples, wherein the determining (S104) of a number of distances within an operating range (d) of the monitoring device (15) to the object (20, 21) that are not measured by the monitoring device (15) during a set time period further comprises to:
sort the distance data samples in corresponding bins of a histogram to identify specific distances not being measured.

Example 9. The computer system (14) of any one of the preceding examples, the monitoring device (15) comprising one or more of a radar sensor, a lidar sensor or sonar sensor.

Example 10. The computer system (14) of any one of the preceding examples, the time period being set to allow all possible distances within the operating range (d) to be measured, as determined by the operating range, distance measurement resolution and the frequency with which the data samples are acquired.

Example 11. A vehicle (10) comprising the computer system (14) of any of examples 1-10.

Example 12. The vehicle (10) of example 11, further being configured to be autonomous or semi-autonomous.

Example 13. A method of a vehicle (10) configured to monitor vehicle surroundings, comprising:
acquiring (S101) data samples from a monitoring device (15) configured to measure a distance to an object (20, 21) located within a field of view (17) of the monitoring device (15);
determining (S102) a difference between at least two sequential data samples of the measured distance from the monitoring device (15) to the object (20, 21), and if said difference exceeds (S103) a set first threshold value (T_{D});
determining (S104) a number of distances within an operating range (d) of the monitoring device (15) to the object (20, 21) that are not measured by the monitoring device (15) during a set time period, wherein the measured distance to the object (20, 21) is not relied upon if the number of distances that are not measured during the set time period is below (S105) a set second threshold value (T_{Z}).

Example 14. A computer program product comprising program code (13) for performing, when executed by the processing circuitry (11), the method of example 13.

Example 15. A non-transitory computer-readable storage medium (12) comprising instructions (13), which when executed by the processing circuitry (11), cause the processing circuitry (11) to perform the method of example 13.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (14) of a vehicle (10) configured to monitor vehicle surroundings, the computer system comprising processing circuitry (11) configured to:
acquire (S101) data samples from a monitoring device (15) configured to measure a distance to an object (20, 21) located within a field of view (17) of the monitoring device (15);
determine (S102) a difference between at least two sequential data samples of the measured distance from the monitoring device (15) to the object (20, 21), and if said difference exceeds (S103) a set first threshold value (T_{D});
determine (S104) a number of distances within an operating range (d) of the monitoring device (15) to the object (20, 21) that are not measured by the monitoring device (15) during a set time period, wherein the measured distance to the object (20, 21) is not relied upon if the number of distances that are not measured during the set time period is below (S105) a set second threshold value (T_{Z}).

2. The computer system (14) of claim 1, wherein if said difference is below (S103) the set first threshold value (T_{D}), the measured distance to the object (20, 21) is relied upon.

3. The computer system (14) of claims 1 or 2, wherein if the number of distances that are not measured during the set time period is above (S105) the set second threshold value (Tz), the measured distance to the object (20, 21) is relied upon.

4. The computer system (14) of claim 3, wherein the determining that the number of distances that are not measured during the set time period is above (S105) the set second threshold value (Tz) indicates the object (21) moving in and out of the field of view (17) of the monitoring device (15).

5. The computer system (14) of any one of the preceding claims, wherein the determining (S102) of a difference between at least two sequential data samples of the measured distance from the monitoring device (15) to the object (20, 21) comprises determining differences between three or more sequential data samples of the measured distance.

6. The computer system (14) of any one of the preceding claims, wherein in case it is determined (S105) that the measured distance to the object (20, 21) cannot relied upon, the processing circuitry (11) is configured to:
alert (S106) an operator of the vehicle (10) that the measured distance to the object (20, 21) cannot be relied upon.

7. The computer system (14) of any one of the preceding claims, wherein in case it is determined (S105) that the measured distance to the object (20, 21) cannot relied upon, the processing circuitry (11) is configured to:
autonomously control operation of the vehicle (10).

8. The computer system (14) of any one of the preceding claims, wherein the determining (S104) of a number of distances within an operating range (d) of the monitoring device (15) to the object (20, 21) that are not measured by the monitoring device (15) during a set time period further comprises to:
sort the distance data samples in corresponding bins of a histogram to identify specific distances not being measured.

9. The computer system (14) of any one of the preceding claims, the monitoring device (15) comprising one or more of a radar sensor, a lidar sensor or sonar sensor.

10. The computer system (14) of any one of the preceding claims, the time period being set to allow all possible distances within the operating range (d) to be measured, as determined by the operating range, distance measurement resolution and the frequency with which the data samples are acquired.

11. A vehicle (10) comprising the computer system (14) of any of claims 1-10.

12. The vehicle (10) of claim 11, further being configured to be autonomous or semi-autonomous.

13. A method of a vehicle (10) configured to monitor vehicle surroundings, comprising:
acquiring (S101) data samples from a monitoring device (15) configured to measure a distance to an object (20, 21) located within a field of view (17) of the monitoring device (15);
determining (S 102) a difference between at least two sequential data samples of the measured distance from the monitoring device (15) to the object (20, 21), and if said difference exceeds (S103) a set first threshold value (T_{D});
determining (S104) a number of distances within an operating range (d) of the monitoring device (15) to the object (20, 21) that are not measured by the monitoring device (15) during a set time period, wherein the measured distance to the object (20, 21) is not relied upon if the number of distances that are not measured during the set time period is below (S105) a set second threshold value (T_{Z}).

14. A computer program product comprising program code (13) for performing, when executed by the processing circuitry (11), the method of claim 13.

15. A non-transitory computer-readable storage medium (12) comprising instructions (13), which when executed by the processing circuitry (11), cause the processing circuitry (11) to perform the method of claim 13.
